# EUROPÄISCHE PATENTSCHRIFT

(11) **EP 3 689 490 B1**
(45) Veröffentlichungstag und Bekanntmachung des Hinweises auf die Patenterteilung: **28.07.2021**
(21) Anmeldenummer: 20155056.3
(22) Anmeldetag: 03.02.2020
(51) Int. Cl.: B21D 26/033

(54) **VERFAHREN ZUR HERSTELLUNG EINES BAUTEILS AUS METALL MITTELS INNENHOCHDRUCKUMFORMEN**
METHOD FOR PRODUCING A COMPONENT MADE OF METAL BY MEANS OF HIGH INTERNAL PRESSURE MOULDING
PROCÉDÉ DE FABRICATION D'UN COMPOSANT MÉTALLIQUE AU MOYEN D'UN FORMAGE À HAUTE PRESSION INTERNE

(30) Priorität: 04.02.2019 DE 102019102638
(43) Veröffentlichungstag der Anmeldung: 05.08.2020
(73) Patentinhaber: Salzgitter Hydroforming GmbH & Co. KG, 08451 Crimmitschau (DE)
(72) Erfinder: DEGENKOLB, Lars, 47251 Duisburg (DE)
(74) Vertreter: Moser Götze & Partner Patentanwälte mbB

(56) Entgegenhaltungen:
- DE-A1-102005 002 714
- DE-A1-102007 018 395
- DE-A1-102017 204 962
- US-A1- 2004 200 550
- US-A1- 2018 078 988
- US-B1- 6 322 645

## Beschreibung

Die Erfindung betrifft ein Verfahren zur Herstellung eines Bauteils aus Metall mittels Innenhochdruckumformen aus einem rohrförmigen Vorprodukt mit mindestens einem Formelement. Als Formelement wird ein Bereich des rohrförmigen Vorproduktes verstanden, der als Biegung und/oder Querschnittsänderung und/oder Wanddickenänderung ausgebildet ist.

Entsprechende Bauteile aus härtbarem Stahl, die nach dem Innenhochdruckumformen wie von dem Presshärten bekannt abgeschreckt werden, werden zum Beispiel häufig in der Automobilindustrie für Rahmen, Träger oder Abgaskomponenten eingesetzt.

Das Innenhochdruckumformen zur Herstellung von Bauteilen aus Stahl ist ein seit langem bekanntes Verfahren und beispielsweise in der deutschen Offenlegungsschrift DE 10 2008 014 213 A1 beschrieben. Hierbei werden rohrförmige Vorprodukte in mindestens zweiteilige Werkzeuge eingelegt und mit einem Wirkmedium, das unter hohem Druck steht, innenseitig beaufschlagt. Hierdurch wird das Vorprodukt aufgeweitet, in eine Gravur beziehungsweise Geometrie des Werkzeugs geformt und erhält somit die Form der Werkzeuggravur. Der Werkstoff muss dabei so ausgelegt sein, dass auch lokal eine hohe Umformung ohne Werkstoffversagen aufgenommen werden kann. Auf diese Weise können mittels Innenhochdruckumformung Bauteile mit sehr komplexer Geometrie zuverlässig hergestellt werden und es ergibt sich gegenüber anderen Herstellungsverfahren der Vorteil, dass weniger Bauteile und/oder weniger Verfahrensschritte erforderlich sind.

Üblicherweise wird das rohrförmige Vorprodukt zum Innenhochdruckumformen aus einem geraden Rohling aus Metall, vorzugsweise aus Stahl, hergestellt. Der Ausdruck "Rohling" als rohrförmiges Halbzeug umfasst dabei sowohl Rohre als auch Hohlprofile mit einer vom kreisrunden Querschnitt abweichenden Geometrie. Die Rohlinge können dabei neben einem runden, auch einen eckigen Querschnitt aufweisen und als nahtlos hergestellte oder geschweißte Rohre vorliegen. Bei geschweißten Rohren sind diese üblicherweise längsnahtgeschweißt, zum Beispiel mittels Hochfrequenz-Induktionsschweißen oder Laserschweißen. Es können aber auch zum Beispiel Extrusionsprofile mit einer oder mehreren Kammern eingesetzt werden.

Bei komplex geformten, durch Innenhochdruckumformung hergestellten Bauteilen werden die im Ausgangszustand im Regelfall geraden Rohlinge üblicherweise zunächst entsprechend der späteren Bauteilkontur in einer Biegemaschine zu einem Vorprodukt vorgebogen. Für das Biegen werden heutzutage üblicherweise CNC-Biege-, Streckbiege-, Freiformbiege- oder Gesenkbiegemaschinen eingesetzt. Anschließend werden die so gebogenen Vorprodukte mit einem Formwerkzeug, wie zum Beispiel einem Stempel, an ausgewählten Stellen einer Verformung unterzogen. Synonyme Begriffe für diese lokal eingebrachten Verformungen sind "Prägen", "Vorprägen", "Vorformen" oder "Preforming".

Der heiß umkämpfte Markt zwingt die Automobilhersteller allerdings ständig nach Lösungen zur Senkung ihres Flottenverbrauches unter Beibehaltung eines höchstmöglichen Komforts und Insassenschutzes zu suchen. Dabei spielt einerseits die Gewichtsersparnis aller Fahrzeugkomponenten eine entscheidende Rolle, andererseits aber auch ein möglichst günstiges Verhalten der einzelnen Bauteile bei hoher statischer und dynamischer Beanspruchung im Betrieb wie auch im Crashfall.

Darüber hinaus stellt die Reduzierung des CO₂-Ausstoßes entlang der gesamten Fertigungskette eine besondere Herausforderung dar, die durch innovative verfahrenstechnische Lösungen angenommen wird. Im Fokus stehen insbesondere Prozessschritte, die direkt oder indirekt auf der Verbrennung fossiler Brennstoffe basieren. Dieser Notwendigkeit versuchen die Vormateriallieferanten dadurch Rechnung zu tragen, dass durch die Bereitstellung hoch- und höchstfester Stähle die Wanddicken reduziert werden können bei gleichzeitig verbessertem Bauteilverhalten bei der Fertigung und im Betrieb. Diese Stähle müssen daher vergleichsweise hohen Anforderungen hinsichtlich Festigkeit, Dehnfähigkeit, Zähigkeit, Energieaufnahme und Korrosionsbeständigkeit sowie ihrer Verarbeitbarkeit beispielsweise bei der Kaltumformung und beim Schweißen genügen.

Unter den vorgenannten Aspekten gewinnt die Herstellung von mittels Innenhochdruck umgeformten Bauteilen aus Metall, insbesondere aus presshärtbaren Stählen, zunehmend an Bedeutung, da diese bei geringerem Materialaufwand die gestiegenen Anforderungen an die Bauteileigenschaften ideal erfüllen. Hierbei wird als rohrförmiges Halbzeug das Vorprodukt vor dem Einlegen in das IHU-Werkzeug auf Austenitisierungstemperatur erhitzt, anschließend im Werkzeug mittels Innenhochdruck umgeformt und mittels des gekühlten Werkzeugs gehärtet. Ein solches Verfahren ist beispielsweise aus der Patentschrift DE 698 03 588 T2 bekannt.

Die Patentschrift US 6,322,645 B1 offenbart ein Verfahren zum Umformen von rohrförmigen Rohlingen in Bauteile und ein entsprechendes Umformwerkzeug hierfür. Es soll ein ökonomisch optimiertes Verfahren bereitgestellt werden, in dem insbesondere eine Dehngrenze des Endprodukts entlang seiner Länge variabel eingestellt werden kann. Dazu wird ein rohrförmiges Vorprodukt zunächst vorgewärmt. Das Vorwärmen kann mittels konduktiver Erwärmung, induktiver Erwärmung oder einer Mischung hieraus erfolgen. Dieses vorgewärmte Vorprodukt wird anschließend dem eigentlichen Umformwerkzeug zugeführt und hierin mittels mit Hochdruck beaufschlagtem Inertgas umgeformt. Dabei kann während dieser Inertgas-Umformung das umzuformende Werkstück induktiv entlang seiner Werkstücklänge erwärmt werden. Durch das induktive Erwärmen während des Umformprozesses wird eine variable Temperaturführung zur Einstellung von mechanischen Kennwerten ermöglicht. Auf ein besonders ausgestaltetes Vorwärmen wird nicht eingegangen.

Aus der deutschen Offenlegungsschrift DE 102 40 876 A1 ist es für die Abschreckhärtung im Zuge einer Innenhochdruckumformung bekannt, dass die Erwärmung auf Austenitisierungstemperatur durch Strahlungswärme in einem Erwärmungsofen, induktiv oder konduktiv erfolgen kann. Auch Kombinationen dieser Erwärmungen werden offenbart.

Bei einer konduktiven Erwärmung, der eine induktive Erwärmung oder eine Erwärmung in einem Ofen vorgeschaltet sein kann, treten allerdings Probleme dann auf, wenn die umzuformenden Vorprodukte ein Formelement aufweisen, also keinen konstanten Querschnitt, keine konstante Wanddicke oder ein oder mehrere Biegungen aufweisen. Da bei einer konduktiven Erwärmung der Strom immer die kürzeste Wegstrecke und/oder den Weg des geringsten Widerstandes zurücklegt, werden bei gleicher Wegstrecke Bereiche einer dünneren Wanddicke oder kleinerem Querschnitt und bei unterschiedlicher Wegstrecke die Bereiche auf der kurzen Wegstrecke stärker erwärmt als die übrigen Bereiche. Dies führt im Extremfall dazu, dass diese Bereiche zum Teil schon die Liquidustemperatur oder Umformtemperatur überschreiten, bevor die anderen Bereiche mit einer längeren Wegstrecke oder höheren Widerständen die Umformtemperatur erreicht haben.

Die deutsche Patentschrift DE 102 12 820 C1 umgeht dieses Problem indem bei einem Werkstück mit über seiner Länge ungleichmäßigem Querschnitt, die Bereiche des Halbzeugs, die einen im Verhältnis zu anderen Bereichen des Halbzeugs kleinen Querschnitt aufweisen, bei der Vorerwärmung überbrückt werden, so dass sie sich nicht oder nur geringfügig erwärmen. Die Bereiche des Halbzeugs, die im Verhältnis zu den anderen Bereichen des Halbzeugs einen großen Querschnitt aufweisen, werden auf ein bestimmtes Temperaturniveau vorerwärmt und anschließend wird das gesamte Halbzeug erwärmt.

Der vorliegenden Erfindung liegt die Aufgabe zu Grunde, ein Verfahren zur Herstellung eines Bauteils aus Metall mittels Innenhochdruckumformen anzugeben, welches auf einfache und kostengünstige Weise bei rohrförmigen Vorprodukten mit mindestens einem Formelement eine möglichst gleichmäßige Erwärmung des Vorprodukts realisiert.

Diese Aufgabe wird durch ein Verfahren mit den Merkmalen des Anspruchs 1 gelöst. Vorteilhafte Ausgestaltungen der Erfindung sind in den Unteransprüchen angegeben.

Nach der Lehre der Erfindung bietet ein Verfahren zur Herstellung eines Bauteils aus Metall mittels Innenhochdruckumformen umfassend die Schritte:
- konduktives Erwärmen eines rohrförmigen Vorproduktes mit mindestens einem Formelement in einem zu erwärmenden Bereich des Vorproduktes mittels Gleich- oder Wechselstrom auf eine Umformtemperatur, wobei das Formelement mindestens eine Biegung und/oder eine Querschnittsänderung und/oder eine Wanddickenänderung aufweist,
- Steuern beziehungsweise Regeln des Gleich- oder Wechselstroms für das Erwärmen mit einem vorab derart festgelegten, vorproduktspezifischen Zeit-Strom-Diagramm für die Stromführung, dass sich die Umformtemperatur in dem zu erwärmenden Bereich des Vorproduktes zwischen dem Formelement und dem übrigen Vorprodukt auf ein Temperaturniveau mit einer maximalen Temperaturdifferenz von +- 50 °C einstellt, wobei die Stromführung mindestens eine Stromabfallphase und/oder eine untere Stromhaltephase umfasst,
- Innenhochdruckumformen des so erwärmten Vorproduktes zu einem Bauteil, eine einfache und kostengünstige Möglichkeit, eine gleichmäßige Erwärmung des Halbzeugs auf Umformtemperatur auch bei Rohlingen mit ein oder mehreren Formelementen, zu erzielen. Es ist selbstverständlich, dass die Stromführung mit der mindestens einen Stromabfallphase und/oder einer unteren Stromhaltephase von einem vorhandenem Stromniveau für das konduktive Erwärmen ausgeht. Dieses Stromniveau wird üblicherweise durch einen Einschaltvorgang mit einer entsprechenden Stromanstiegsphase erreicht. In Bezug auf die einzustellende Temperaturdifferenz werden im Wesentlichen die Unterschiede zwischen den Temperaturen der Formelemente und dem übrigen Vorprodukt betrachtet. Dies trifft insbesondere zu, wenn das Formelement eine Querschnittsänderung oder eine Wanddickenänderung ist. Für den Fall, dass das Formelement eine Biegung ist, treten bereits Temperaturdifferenzen innerhalb des Formelements auf, so dass die einzustellende Temperaturdifferenz die Temperatur des übrigen Vorprodukts und die minimale und die maximale Temperatur innerhalb der Biegung berücksichtigt.

Im Zusammenhang mit der Erfindung ist der Begriff Formelement als Sammelbegriff für einen Bereich des rohrförmigen Vorproduktes, insbesondere des zu erwärmenden Bereiches des Vorproduktes, zu verstehen, der als Biegung und/oder Querschnittsänderung und/oder Wanddickenänderung ausgebildet ist. Die Querschnittsänderung und/oder Wanddickenänderung ist in Bezug auf den Querschnitt beziehungsweise die Wanddicke auf den angrenzenden Bereich des übrigen Vorproduktes ohne das Formelement bezogen. Bevorzugt ist das Formelement eine Biegung. Hierzu kann zusätzlich eine Querschnittsänderung und/oder Wanddickenänderung vorliegen.

Außerdem ist im Zusammenhang mit der Erfindung der Begriff Stromführung als Sammelbegriff für mindestens eine Stromabfallphase und/oder Stromhaltephase zu verstehen.

Der Kern der Erfindung besteht also in der Erzielung einer gleichmäßigen Temperaturverteilung in allen zu erwärmenden Bereichen des Vorprodukts mit den beschriebenen Formelementen beziehungsweise geometrischen Eigenschaften von Wanddicken- oder Querschnittsänderungen sowie Biegungen, derart, dass eine vorproduktspezifische Stromleistung zur konduktiven Erwärmung in das Vorprodukt geleitet wird, die einem Zeit-Strom-Diagramm für die Stromführung folgt und dadurch örtliche Überhitzungen des rohrförmigen Vorprodukts bei der konduktiven Erwärmung vermieden werden und eine sehr gleichmäßige Erwärmung erreicht wird.

Hierbei ist die Stromführung beziehungsweise sind die Stromanstiegs- und/oder Stromhalte- und/oder Stromabfallphasen für die Stromzufuhr so eingestellt, dass während der ausreichend langen Stromabfallphase beziehungsweise der Stromabfallphase und -haltephase ein Temperaturausgleich zwischen den Bereichen mit höherer Temperatur und den Bereichen niedrigerer Temperatur des Rohlings stattfinden kann. Die Stromanstiegs- und Stromabfallphasen können dabei auch in einem kompletten Stroman- und Stromabschalten enden oder einem kompletten Stroman- und Stromabschalten mit entsprechend kurzen Schaltzeiten entsprechen.

In einer vorteilhaften erfindungsgemäßen Ausgestaltung der Erfindung ist das Verfahren dadurch gekennzeichnet, dass in den dem Erwärmen vorgelagerten Vorform- oder Biegeprozessen die Wanddicke des Vorproduktes in der Weise eingestellt wird, dass eine Erhöhung der Wanddicke im Vergleich zu einer Nennwanddicke in Bereichen einer kurzen Wegstrecke für den Stromfluss und eine Verringerung der Wanddicke im Vergleich zur Nennwanddicke in Bereichen einer langen Wegstrecke für den Stromfluss erreicht wird.

Vorteilhaft erfolgt die gezielte Einstellung der Wanddicke des Rohlings in vorgelagerten Vorform- oder Biegeprozessen, wie z.B. CNC-Biegen. Durch die gezielte Steuerung der Wanddicke in den Bereichen des Stromflusses wird die gleichmäßige Erwärmung des Vorprodukts während des konduktiven Erwärmens nochmals verbessert. Im günstigsten Fall beinhaltet das Zeit-Strom-Diagramm in diesem Fall nur eine einzige Stromanstiegs- und/oder Stromhalte- und/oder Stromabfallphase. Hierdurch wird vorteilhaft die für eine gleichmäßige Erwärmung notwendige Zeit verkürzt.

Das erfindungsgemäße Verfahren eignet sich bevorzugt für Vorprodukte aus Stahl, Leichtmetall oder härtbarem Stahl, insbesondere für Stahllegierungen zum Erreichen von Presshärteeigenschaften, ferritischen Stahllegierungen zum Erreichen hoher Umformgrade, unlegierten Stahlgüten zum Erreichen hoher Umformgrade oder Stahllegierungen zum Erreichen von lufthärtenden Eigenschaften.

Bevorzugt ist vorgesehen, dass die Stromführung eine Abfolge von Stromanstiegsphasen und Stromabfallphasen umfasst.

Besonders bevorzugt ist, dass die Stromführung eine Abfolge von Stromanstiegsphasen, Stromabfallphasen und unteren Haltephasen oder eine Abfolge von Stromanstiegsphasen, oberen Haltephasen, Stromabfallphasen und unteren Haltephasen umfasst.

Um den gewünschten erfinderischen Effekt einer Einstellung eines Temperaturniveaus mit einer maximalen Temperaturdifferenz von +- 50 °C in dem zu erwärmenden Bereich zwischen dem Formelement und dem übrigen Vorprodukt zu erreichen, werden relativ lange Stromabfallphasen und/oder untere Haltephasen benötigt. Daher dauern die Stromabfallphasen ohne etwaige Haltephasen oder die Stromabfallphasen mit den unteren Haltephasen jeweils 0,1 s bis 10 s, vorzugsweise 1 s bis 3 s.

Eine weitere vorteilhafte Ausgestaltung sieht vor, dass sich die Umformtemperatur in dem zu erwärmenden Bereich des Vorproduktes auf ein Temperaturniveau mit einer maximalen Temperaturdifferenz von +- 25 °C einstellt.

Außerdem geht die vorliegende Erfindung davon aus, dass das Vorprodukt vor dem konduktiven Erwärmen ein homogenes Temperaturniveau mit einer maximalen Temperaturdifferenz von +- 10 °C, vorzugsweise +- 5 °C, aufweist.

Vorteilhaft ist vorgesehen, dass je nach Werkstoff des Vorprodukts das Vorprodukt auf eine materialspezifische Umformtemperatur konduktiv erwärmt wird, die mindestens 150 °C, vorzugsweise mindestens 350 °C (beispielsweise Leichtmetall) oder mindestens 600 °C (beispielsweise lufthärtende Stahlegierungen) oder mindestens 750 °C (beispielsweise Stahllegierungen zum Erreichen von Presshärteeigenschaften), beträgt.

Vorteilhafter Weise ist je nach gewähltem Metall für das Vorprodukt und dessen Umformeigenschaften beziehungsweise nach dem Innenhochdruckumformen erreichbaren Eigenschaften ein konduktives Erwärmen des Vorproduktes auf eine materialspezifische, zweckgebundene Umformtemperatur vorgesehen. Für Stahllegierungen zum Erreichen von Presshärteeigenschaften ist diese Umformtemperatur mindestens gleich oder größer als die Ac3-Temperatur, liegt aber als Obergrenze mindestens 250 °C unterhalb der Liquidustemperatur dieser Stahllegierung. Für ferritische Stahllegierungen zum Erreichen hoher Umformgrade ist die materialspezifische, zweckgebundene Umformtemperatur mindestens gleich oder größer als die Ac3-Temperatur und liegt als Obergrenze mindestens 250 °C unterhalb der Liquidustemperatur dieser Stahllegierungen beziehungsweise Stahlgüten. Für unlegierte Stahlgüten zum Erreichen hoher Umformgrade liegt die materialspezifische, zweckgebundene Umformtemperatur als Obergrenze mindestens 250 °C unterhalb der Liquidustemperatur dieser Stahlgüten. Für Stahllegierungen zum Erreichen von lufthärtenden Eigenschaften, liegt die materialspezifische, zweckgebundene Umformtemperatur als Obergrenze mindestens 50 °C unterhalb der A1-Temperatur. Für Leichtmetalle beträgt die materialspezifische, zweckgebundene Umformtemperatur 150 °C bis 480 °C.

Ziel ist es bei der konduktiven Erwärmung, dass die Bereiche, in denen während der Strombeaufschlagung eine höhere Temperatur erreicht wird, die maximale Temperatur immer mindestens 250 °C unterhalb der Liquidustemperatur bleibt, um ein Aufschmelzen des Werkstoffs sicher zu vermeiden und in der Stromabfallphase, die Temperatur in den Bereichen mit einer noch zu niedrigen Temperatur, also unterhalb der gewünschten Umformtemperatur, durch einen Temperaturausgleich über die Zeit weiter zu erhöhen.

Die Erwärmung des Vorproduktes auf eine Temperatur oberhalb der Umformtemperatur kann auf mehrere Weisen erfolgen. Das Vorprodukt kann komplett konduktiv auf diese Temperatur erhitzt werden, wobei das Vorprodukt schon im Werkzeug positioniert sein kann oder außerhalb des Werkzeugs erhitzt wird. Es ist aber auch möglich, eine Vorerwärmung des Vorproduktes durch Strahlungswärme oder induktiv durchzuführen und die Erwärmung auf die geforderte Endtemperatur anschließend konduktiv vorzunehmen. Die Vorerwärmung kann dabei bis zur materialspezifischen, zweckgebundenen Umformtemperatur des Werkstoffs erfolgen. Durch eine Vorerwärmung des Vorproduktes, zum Beispiel in einem separaten Ofen oder einer separaten Einrichtung zur Induktionserwärmung, kann vorteilhaft eine Verkürzung der Hauptzeit, d.h. die Zeit für die Belegung des IHU-Werkzeugs, erreicht werden. Dies steigert signifikant die Wirtschaftlichkeit des Umformprozesses.

Wenn alle Bereiche des erfindungsgemäß erhitzten Vorproduktes dann die geforderte Umformtemperatur erreicht haben, ist die Erwärmung abgeschlossen und das Vorprodukt wird sodann innenhochdruckumgeformt. Bei einem Bauteil, welches gehärtet werden soll, kann die Abschreckung des Vorprodukts nach vollendeter Umformung durch einen innigen Kontakt des umgeformten Bauteils mit der formgebenden Kontur der Matrize durch intensive Kühlung des Werkzeugs über entsprechend angeordnete Kühlkanäle erfolgen. Die Abschreckung des Bauteils kann dabei gleichzeitig oder zeitlich versetzt zur erstmaligen Kontaktierung des Bauteils mit der formgebenden Kontur der Matrize erfolgen. Alternativ oder zusätzlich kann das rohrförmige Bauteil von innen, beispielsweise durch Einleiten eines gekühlten Mediums, abgeschreckt werden. Hierbei kann ein Gas und/oder eine Flüssigkeit als Medium verwendet werden.

In einer bevorzugten Anwendung wird als Metall für das Innenhochdruckumformen ein härtbarer Stahl gewählt, der dann, wie es vom Presshärten bekannt ist, nach dem Innenhochdruckumformen abgeschreckt wird. Der härtbare Stahl in Form des Vorprodukts wird dann für das Innenhochdruckumformen mindestens auf Austenitisierungstemperatur oberhalb der Ac3-Temperatur konduktiv erwärmt. Als härtbarer Stahl kann zum Beispiel ein 22MnB5 oder 1800PHS eingesetzt werden.

Das Zeit-Strom-Diagramm für die Stromführung, also von Stromanstiegs- und/oder Stromhalte- und/oder Stromabfallphase wird nach einer vorteilhaften Weiterbildung der Erfindung mittels Stromführungs-FEM-Simulationen und/oder aus Vorversuchen mittels realer Temperaturmessungen ermittelt. Das Steuern des Gleich- oder Wechselstromes wird dann mittels der aus dem Zeit-Strom-Diagramm entnommenen Werte für Stromanstiegs- und/oder Stromhalte- und/oder Stromabfallphase vorgenommen. Das beschriebene Zeit-Strom-Diagramm ist abhängig von der Geometrie des Vorproduktes also beispielsweise von der Länge, der Wanddicke und/oder dem Querschnitt, sowie von dem eingebrachten Formelement in das Vorprodukt, beispielsweise einer Biegung, Wanddickenänderung und/oder Querschnittsänderung. Dabei werden vorab insbesondere in Simulationen oder Vorversuchen auch Temperaturmaxima erkannt. Mit dem aus diesen Simulationen oder Vorversuchen erhaltenen Daten wird ein vorproduktspezifisches Zeit-Strom-Diagramm erstellt, dass vermeidet, dass der gesetzte Schwellenwert von 250 °C unterhalb der Liquidustemperatur überschritten wird.

In einer weiteren vorteilhaften Ausgestaltung der Erfindung ist vorgesehen, dass zusätzlich Temperaturmessungen am rohrförmigen Vorprodukt während des konduktiven Erwärmens vorgenommen werden, bei denen etwaig auftretende Temperaturmaxima, welche den Schwellwert überschreiten, der mindestens 250 °C unterhalb der Liquidustemperatur des Vorproduktes liegt, detektiert werden und danach die Stromführung zusätzlich gesteuert, insbesondere geregelt wird. Hierdurch wird sichergestellt, dass ein weiterer Temperaturanstieg während der konduktiven Erwärmung sicher vermieden wird.

Dafür ist vorteilhaft weiter vorgesehen, dass eine Taktrate der Stromführung während des konduktiven Erwärmens variabel eingestellt werden kann. Demzufolge kann auch das Zeit-Strom-Diagramm selbst variabel ausgestaltet sein.

Die konduktive Erwärmung selbst, erfolgt erfindungsgemäß vorteilhaft mit einem Konduktionstransformator mit verschiedenen Leistungsstufen, die beispielsweise zwischen 3000 A und 14000 A liegen. Die auszuwählenden Leistungsstufen des Konduktionstransformators für die Stromzufuhr erfolgt dann vorteilhaft anhand der jeweils zu erwärmenden Geometrie des Vorproduktes, dessen Auswahlkriterien Vorproduktlänge, -querschnitt und -wanddicke sind. Auch die Leistungsstufen können vorteilhaft mittels FEM-Simulation oder auf Basis von Vorversuchen entsprechend festgelegt werden.

Bevorzugt wird für eine Reduzierung der Prozesszeiten während des Erwärmens das Zeit-Strom-Diagramm für die Stromführung variabel angepasst.

Anhand der im Anhang dargestellten schematischen Figuren wird die Erfindung nachfolgend näher beschrieben. Es zeigen:
Figur 1 eine Draufsicht auf eine untere Werkzeughälfte eines Werkzeugs für das Innenhochdruckumformen und
Figur 2 ein Temperatur-/Strom- und Zeit-Diagramm für ein pulsierendes, konduktives Erwärmen eines Vorprodukts.

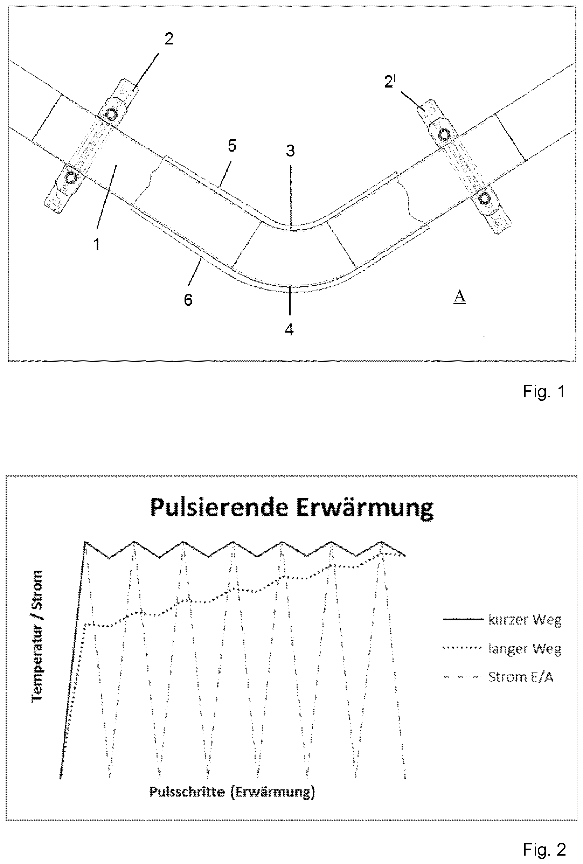

Dargestellt ist in Figur 1 in einer Draufsicht eine untere Werkzeughälfte A eines Werkzeugs für das Innenhochdruckumformen von Vorprodukten zu Bauteilen, in welches ein vorgebogenes rohrförmiges Vorprodukt 1 in eine Gravur 5, 6 des Werkzeugs mit entsprechender Kontur für eine Aufweitung mittels Innenhochdruck eingelegt ist. Das Vorprodukt 1 ist mit einer Biegung versehen, die einen Innenradius 3 und einen Außenradius 4 aufweist. Im Werkzeug sind Klemmbacken 2, 2' eines hier nicht dargestellten Konduktors für ein konduktives Erwärmen des Vorprodukts 1 angeordnet, die an den Enden des gebogenen Vorproduktes 1 Kontakt haben und die Strombeaufschlagung vornehmen sollen. Der von der linken Klemmbacke 2, 2' zu der rechten Klemmbacke 2' im Zuge des konduktiven Erwärmens fließende Strom legt entlang des Innenradius 3 einen kürzeren Weg zurück als entlang des Außenradius 4. Der kürzere Weg ist proportional zu einem geringeren Strom-Widerstand am Innenradius 3. Der von der linken Klemmbacke 2, 2' zu der rechten Klemmbacke 2' fließende Strom wählt den Weg des geringeren Widerstands, so dass das Vorprodukt 1 am Innenradius 3 stärker als am Außenradius 4 erwärmt wird.

In einer bevorzugten Anwendung wird als Metall für das Innenhochdruckumformen ein härtbarer Stahl gewählt, der dann, wie es vom Presshärten bekannt ist, nach dem Erwärmen und Innenhochdruckumformen abgeschreckt wird. Der härtbare Stahl in Form des Vorproduktes wird dann für das Innenhochdruckumformen, gegebenenfalls nach einer Vorerwärmung, mindestens auf Austenitisierungstemperatur beziehungsweise A1- oder Ac3-Temperatur konduktiv erwärmt. Die Einrichtungen zum Abschrecken beziehungsweise Härten des erwärmten und innenhochdruckumgeformten Bauteils sind hier nicht dargestellt. Das Abschrecken des Bauteils kann innerhalb des Werkzeugs oder nach der Entnahme aus dem Werkzeug erfolgen. Bei einem Abschrecken des Bauteils im Werkzeug kann entweder das Werkzeug oder das Bauteil von innen oder über beide Kühlweisen gekühlt werden.

Außerdem werden für das Herstellen der Vorprodukte bevorzugt nahtlose oder geschweißte Rohre verwendet.

Die Figur 2 zeigt ein Diagramm, in dem eine Temperatur des Vorproduktes in °C beziehungsweise eine im Vorprodukt fließende Stromstärke in A über der Zeit in s während eines erfindungsgemäßen konduktiven Erwärmens eines Vorprodukts dargestellt ist. Es ist anhand der strich-punktierten Linie ersichtlich, dass der Strom mit einem vorab festgelegten vorproduktspezifischen Zeit-Strom-Diagramm für die Stromführung konduktiv erwärmt wird. In Stromanstiegsphasen steigt der Strom und in Stromabfallphasen fällt der Strom puls- und dreieckförmig bei jeweils gleichen Steigungs- beziehungsweise Gefälleraten und gleicher Länge der Pulsschritte. Die strich-punktierte Linie ist in der Figur 2 mit Strom E/A bezeichnet im Sinne von Strom Ein/Aus. Die steilen Stromanstiegs- und Stromabfallphasen stellen sich bei einem gepulsten Ein- und Ausschalten des Stroms ein, der mit einem jeweils starken linearen Anstieg und Abfall des Stroms einhergeht.

Entsprechend dem vorab festgelegten Zeit-Strom-Diagramm für die Stromführung, die im vorliegenden Ausführungsbeispiel ein gepulstes Ein- und Ausschalten des Stroms ist, ergibt sich für das rohrförmige Vorprodukt im Bereich der kurzen Wegstrecke für den Stromfluss am Innenradius 3 eine schnelle Erwärmung (siehe Temperaturverlauf gemäß der durchgezogenen Linie) und im Bereich der langen Wegstrecke am Außenradius 4 eine langsamere Erwärmung (siehe Temperaturverlauf gemäß der punktierten Linie).

Durch die erfindungsgemäße Stromeinleitung in das Vorprodukt gemäß dem vorab festgelegten vorproduktspezifischen Zeit-Strom-Diagramm für die Stromführung wird einerseits eine Überhitzung im Bereich des Innenradius 3 vermieden und andererseits gleicht sich die Temperatur im Bereich des Außenradius 4 der Temperatur des Innenradius 3 dadurch immer mehr an. Im vorliegenden Ausführungsbeispiel erfolgt dies in etwa nach sieben Pulsschritten. Nach Erreichen einer vorgewählten gewünschten Temperatur in den zu erwärmenden und dann auch umzuformenden Bereichen erfolgt dann das Innenhochdruckumformen. Diese vorgewählte gewünschte Temperatur liegt auf jedem Fall an allen Stellen der zu erwärmenden mindestens 250 °C unterhalb der Liquidustemperatur des Vorproduktes.

In einem (nicht dargestellten) Ausführungsbeispiel eines einfach gebogenen Rohrs einer Stahllegierung 1800 PHS mit dessen Endprodukt Presshärteeigenschaften erzielt werden, wird Wechselstrom an den beiden Enden des vorgebogenen Rohres beaufschlagt. Die Aufheizzeit für die Stromanstiegsphase bis zur Detektion von Temperaturmaxima 250 °C unterhalb der Liquidustemperatur beträgt 30 Sekunden. Es folgt eine Stromabfallphase von 4 Sekunden, in der die Temperaturdifferenz von 250 °C im Vorprodukt durch Wärmeleitung verringert wird, anschließend erfolgt eine Stromanstiegsphase von 6 Sekunden, diese Sequenz von Stromanstiegsphase (6 Sekunden) und Stromabfallphase (4 Sekunden) wird solange wiederholt, bis eine Temperaturdifferenz von +- 100 °C erreicht ist. Anschließend wird die Zeit für die Stromanstiegsphase allmählich verringert, die Zeit für die Stromabfallphase ebenfalls allmählich verringert und eine untere Stromhaltephase im Anschluss an die Stromabfallphase (1 Sekunde) hinzugefügt bis zum Erreichen der geforderten, gleichmäßigen, materialspezifischen, zweckgebundenen Umformtemperatur mit einer Temperaturdifferenz von +- 50 °C, bevorzugt von +- 25 °C.

### Bezugszeichenliste

- A: untere Werkzeughälfte
- 1: gebogenes, rohrförmiges Vorprodukt
- 2, 2': Klemmbacken-Konduktionselektrode
- 3: Innenradius
- 4: Außenradius
- 5, 6: Werkzeuggravur

## Patentansprüche

1. Verfahren zur Herstellung eines Bauteils aus Metall mittels Innenhochdruckumformen umfassend die Schritte:
- konduktives Erwärmen eines rohrförmigen Vorproduktes mit mindestens einem Formelement mittels Gleich- oder Wechselstrom in einem zu erwärmenden Bereich des Vorproduktes auf eine Umformtemperatur, wobei das Formelement mindestens eine Biegung und/oder eine Querschnittsänderung und/oder eine Wanddickenänderung aufweist,
- Steuern beziehungsweise Regeln des Gleich- oder Wechselstroms für das Erwärmen mit einem vorab derart festgelegten Zeit-Strom-Diagramm für die Stromführung, dass sich die Umformtemperatur in dem zu erwärmenden Bereich des Vorproduktes zwischen dem Formelement und dem übrigen Vorprodukt auf ein Temperaturniveau mit einer maximalen Temperaturdifferenz von +- 50 °C einstellt, wobei die Stromführung mindestens eine Stromabfallphase und/oder Stromhaltephase umfasst,
- Innenhochdruckumformen des so erwärmten Vorproduktes zu einem Bauteil.

2. Verfahren nach Anspruch 1, **dadurch gekennzeichnet, dass** das vorproduktspezifische Zeit-Strom-Diagramm für die Stromführung mittels Stromführungs-FEM-Simulationen und/oder aus Vorversuchen ermittelt wird.

3. Verfahren nach den Ansprüchen 1 oder 2, **dadurch gekennzeichnet, dass** die Stromführung eine Abfolge von Stromanstiegsphasen und Stromabfallphasen umfasst.

4. Verfahren nach den Ansprüchen 1 oder 2, **dadurch gekennzeichnet, dass** die Stromführung eine Abfolge von Stromanstiegsphasen, Stromabfallphasen und unteren Haltephasen oder eine Abfolge von Stromanstiegsphasen, oberen Haltephasen, Stromabfallphasen und unteren Haltephasen umfasst.

5. Verfahren nach mindestens einem der Ansprüche 1 bis 4, **dadurch gekennzeichnet, dass** die Stromabfallphasen oder die Stromabfallphasen mit den unteren Haltephasen jeweils 0,1 s bis 10 s, vorzugsweise 1 s bis 3 s, dauern.

6. Verfahren nach mindestens einem der Ansprüche 1 bis 5, **dadurch gekennzeichnet, dass** sich die Umformtemperatur in dem zu erwärmenden Bereich des Vorproduktes auf ein Temperaturniveau mit einer maximalen Temperaturdifferenz von +- 25 °C einstellt.

7. Verfahren nach mindestens einem der Ansprüche 1 bis 6, **dadurch gekennzeichnet, dass** das Vorprodukt vor dem konduktiven Erwärmen ein homogenes Temperaturniveau mit einer maximalen Temperaturdifferenz von +- 10 °C, vorzugsweise +- 5 °C, aufweist.

8. Verfahren nach mindestens einem der Ansprüche 1 bis 7, **dadurch gekennzeichnet, dass** das konduktive Erwärmen des rohrförmigen Vorprodukts auf Umformtemperatur in dem zu erwärmenden Bereich über Temperaturmessungen überwacht wird und bei Bedarf die Stromführung angepasst wird.

9. Verfahren nach mindestens einem der Ansprüche 1 bis 8, **dadurch gekennzeichnet, dass** während des konduktiven Erwärmens eine Taktrate der Stromführung und/oder das Zeit-Strom-Diagramm für die Stromführung variabel eingestellt wird.

10. Verfahren nach mindestens einem der Ansprüche 1 bis 9, **dadurch gekennzeichnet, dass** bei einem Erwärmen durch einen Konduktionstransformator mit verschiedenen Leistungsstufen für die Strombeaufschlagung, die auszuwählenden Leistungsstufen des Konduktionstransformators für die Stromzufuhr anhand der jeweils zu erwärmenden Geometrie des Vorproduktes erfolgt, dessen Auswahlkriterien Vorproduktlänge, -querschnitt und -wanddicke sind.

11. Verfahren nach mindestens einem der Ansprüche 1 bis 10, **dadurch gekennzeichnet, dass** in dem Erwärmen vorgelagerten Vorform- oder Biegeprozessen die Wanddicke des Vorproduktes in der Weise eingestellt wird, dass eine Erhöhung der Wanddicke im Vergleich zu einer Nennwanddicke in Bereichen einer kurzen Wegstrecke für den Stromfluss und eine Verringerung der Wanddicke im Vergleich zur Nennwanddicke in Bereichen einer langen Wegstrecke für den Stromfluss erreicht wird.

12. Verfahren nach mindestens einem der Ansprüche 1 bis 11, **dadurch gekennzeichnet, dass** das Vorprodukt aus Stahl, Leichtmetall oder härtbarem Stahl besteht, insbesondere aus Stahllegierungen zum Erreichen von Presshärteeigenschaften, ferritischen Stahllegierungen zum Erreichen hoher Umformgrade, unlegierten Stahlgüten zum Erreichen hoher Umformgrade oder Stahllegierungen zum Erreichen von lufthärtenden Eigenschaften.

13. Verfahren nach mindestens einem der Ansprüche 1 bis 12, **dadurch gekennzeichnet, dass** das Vorprodukt auf eine materialspezifische Umformtemperatur konduktiv erwärmt wird, die mindestens 150 °C, vorzugsweise mindestens 350 °C oder mindestens 600 °C oder mindestens 750 °C, beträgt.

14. Verfahren nach mindestens einem der Ansprüche 1 bis 13, **dadurch gekennzeichnet, dass** das Vorprodukt auf eine Umformtemperatur konduktiv erwärmt wird, die für Stahllegierungen zum Erreichen von Presshärteeigenschaften mindestens gleich oder größer ist als die Ac3-Temperatur und mindestens 250 °C unterhalb der Liquidustemperatur liegt, die für ferritische Stahllegierungen zum Erreichen hoher Umformgrade mindestens gleich oder größer ist als die Ac3-Temperatur und mindestens 250 °C unterhalb der Liquidustemperatur liegt, die für unlegierte Stahlgüten mindestens 250 °C unterhalb der Liquidustemperatur liegt, die für Stahllegierungen zum Erreichen von lufthärtenden Eigenschaften mindestens 50 °C unterhalb der A1-Temperatur liegt und für Leichtmetall zwischen 150 °C und 480 °C beträgt.

15. Verfahren nach mindestens einem der Ansprüche 1 bis 14, **dadurch gekennzeichnet, dass** das Vorprodukt vor dem konduktiven Erwärmen mittels Strahlungswärme und/oder induktiv vorerwärmt wird.

16. Verfahren nach mindestens einem der Ansprüche 1 bis 15, **dadurch gekennzeichnet, dass** das Vorprodukt vor und/oder nach einem Einlegen in ein Innenhochdruck-Umformwerkzeug konduktiv erwärmt wird.

17. Verfahren nach mindestens einem der Ansprüche 1 bis 16, **dadurch gekennzeichnet, dass** das Vorprodukt beziehungsweise Bauteil während des Innenhochdruckumformens und/oder nach dem Innenhochdruckumformen, vorzugsweise zum Abschreckhärten, gekühlt wird.

18. Verfahren nach Anspruch 17, **dadurch gekennzeichnet, dass** das Vorprodukt beziehungsweise Bauteil in einem Innenhochdruck-Umformwerkzeug gekühlt wird und hierfür das Umformwerkzeug mittels eines Kühlmittels und/oder das Vorprodukt beziehungsweise Bauteil von innen mittels eines Kühlmittels gekühlt wird.

## Claims

1. Method for producing a component made of metal by means of tube hydroforming, comprising the steps of:
- conductively heating a tubular intermediate product having at least one shaped element to a deformation temperature by means of direct or alternating current in a region of the intermediate product to be heated, wherein the shaped element has at least one bend and/or a change in cross section and/or a change in wall thickness,
- controlling or regulating the direct or alternating current for heating by means of a time-current curve for the current conduction, which curve is established in advance in such a way that the deformation temperature in the region of the intermediate product to be heated between the shaped element and the rest of the intermediate product is at a temperature level with a maximum temperature difference of +-50°C, wherein the current conduction comprises at least one current-drop phase and/or current-holding phase,
- tube-hydroforming the thus-heated intermediate product to form a component.

2. Method according to claim 1, **characterized in that** the intermediate-product-specific time-current curve for the current conduction is determined by means of current conduction FEM simulations and/or preliminary tests.

3. Method according to either claim 1 or claim 2, **characterized in that** the current conduction comprises a sequence of current-rise phases and current-drop phases.

4. Method according to either claim 1 or claim 2, **characterized in that** the current conduction comprises a sequence of current-rise phases, current-drop phases, and lower holding phases, or a sequence of current-rise phases, upper holding phases, current-drop phases, and lower holding phases.

5. Method according to at least one of claims 1 to 4, **characterized in that** the current drop phases or the current-drop phases with the lower holding phases each last 0.1 s to 10 s, preferably 1 s to 3 s.

6. Method according to at least one of claims 1 to 5, **characterized in that** the deformation temperature in the region of the intermediate product to be heated is set at a temperature level with a maximum temperature difference of +-25°C.

7. Method according to at least one of claims 1 to 6, **characterized in that**, before the conductive heating, the intermediate product has a homogeneous temperature level with a maximum temperature difference of +-10°C, preferably +-5°C.

8. Method according to at least one of claims 1 to 7, **characterized in that** the conductive heating of the tubular intermediate product to the deformation temperature in the region to be heated is monitored by means of temperature measurements, and the current conduction is adjusted if necessary.

9. Method according to at least one of claims 1 to 8, **characterized in that** a clock rate of the current conduction and/or the time-current curve for the current conduction is variably adjusted during the conductive heating.

10. Method according to at least one of claims 1 to 9, **characterized in that**, when heating by means of a conduction transformer with different power stages for the application of current, the power stages of the conduction transformer to be selected for the power supply are based on the particular geometry of the intermediate product to be heated, the selection criteria of which are the length, cross section, and wall thickness of the intermediate product.

11. Method according to at least one of claims 1 to 10, **characterized in that**, in the pre-shaping or bending processes which precede the heating, the wall thickness of the intermediate product is set in such a way that an increase in the wall thickness compared with a nominal wall thickness is achieved in regions of a short path for the current flow and a reduction in the wall thickness compared with the nominal wall thickness is achieved in regions of a long path for the current flow.

12. Method according to at least one of claims 1 to 11, **characterized in that** the intermediate product consists of steel, light metal, or hardenable steel, in particular of steel alloys to achieve press hardness properties, ferritic steel alloys to achieve high degrees of deformation, unalloyed steel grades to achieve high degrees of deformation, or steel alloys to achieve air-hardening properties.

13. Method according to at least one of claims 1 to 12, **characterized in that** the intermediate product is conductively heated to a material-specific deformation temperature which is at least 150°C, preferably at least 350°C, or at least 600°C, or at least 750°C.

14. Method according to at least one of claims 1 to 13, **characterized in that** the intermediate product is conductively heated to a deformation temperature which is at least equal to or greater than the Ac3 temperature and at least 250°C below the liquidus temperature in order to achieve press hardness properties for steel alloys, at least equal to or greater than the Ac3 temperature and at least 250°C below the liquidus temperature in order to achieve high degrees of deformation for ferritic steelalloys, at least 250°C below the liquidus temperature for unalloyed steel grades, at least 50°C below the A1 temperature in order to achieve air-hardening properties for steel alloys, and between 150°C and 480°C for light metal.

15. Method according to at least one of claims 1 to 14, **characterized in that** the intermediate product is preheated by means of radiant heat and/or inductively before the conductive heating.

16. Method according to at least one of claims 1 to 15, **characterized in that** the intermediate product is conductively heated before and/or after being placed in a tube hydroforming tool.

17. Method according to at least one of claims 1 to 16, **characterized in that** the intermediate product or component is cooled during tube hydroforming and/or after tube hydroforming, preferably for quench hardening.

18. Method according to claim 17, **characterized in that** the intermediate product or component is cooled in a tube-hydroforming tool, and the tool is cooled by means of a coolant and/or the intermediate product or component is cooled from the inside by means of a coolant for this purpose.

## Revendications

1. Procédé de fabrication d'un composant en métal par formage sous haute pression interne, le procédé comprenant les étapes suivantes :
- chauffer par conduction un pré-produit tubulaire comprenant au moins un élément de moulage au moyen d'un courant continu ou alternatif dans une zone à chauffer du pré-produit à une température de formage, l'élément de moulage présentant au moins une courbure et/ou une variation de section transversale et/ou une variation d'épaisseur de paroi,
- commander ou réguler le courant continu ou alternatif destiné au chauffage avec un diagramme temps-courant préalablement défini de la conduction de courant de manière à régler la température de formage dans la zone à chauffer du pré-produit entre l'élément de moulage et le reste du pré-produit à un niveau de température avec une différence de température maximale de +/- 50 °C, la conduction de courant comprenant au moins une phase de diminution de courant et/ou une phase de maintien de courant,
- effectuer le formage sous haute pression interne du pré-produit ainsi chauffé pour obtenir un composant.

2. Procédé selon la revendication 1, **caractérisé en ce que** le diagramme temps-courant, spécifique au pré-produit, de la conduction de courant est déterminé au moyen de simulations FEM de conduction de courant et/ou d'essais préliminaires.

3. Procédé selon les revendications 1 ou 2, **caractérisé en ce que** la conduction de courant comprend une séquence de phases d'augmentation de courant et de phases de diminution de courant.

4. Procédé selon les revendications 1 ou 2, **caractérisé en ce que** la conduction de courant comprend une séquence de phases d'augmentation de courant, de phases de diminution de courant et de phases de maintien inférieures ou une séquence de phases d'augmentation de courant, de phases de maintien supérieures, de phases de diminution de courant et de phases de maintien inférieures.

5. Procédé selon l'une au moins des revendications 1 à 4, **caractérisé en ce que** les phases de diminution de courant ou les phases de diminution de courant avec les phases de maintien inférieures durent chacune 0,1 s à 10 s, de préférence 1 s à 3 s.

6. Procédé selon l'une au moins des revendications 1 à 5, **caractérisé en ce que** la température de formage dans la zone à chauffer du pré-produit est réglée à un niveau de température avec une différence de température maximale de +/- 25 °C.

7. Procédé selon l'une au moins des revendications 1 à 6, **caractérisé en ce que** le pré-produit présente un niveau de température homogène avec une différence de température maximale de +/- 10 °C, de préférence +/- 5 °C, avant le chauffage par conduction.

8. Procédé selon l'une au moins des revendications 1 à 7, **caractérisé en ce que** le chauffage par conduction du pré-produit tubulaire à la température de formage dans la zone à chauffer est surveillé par des mesures de température et la conduction du courant est ajustée si nécessaire.

9. Procédé selon l'une au moins des revendications 1 à 8, **caractérisé en ce qu'**une cadence d'horloge de la conduction de courant et/ou du diagramme temps-courant de la conduction de courant est réglée de manière variable pendant le chauffage par conduction.

10. Procédé selon l'une au moins des revendications 1 à 9, **caractérisé en ce que**, lors du chauffage à l'aide d'un transformateur de conduction à différents niveaux de puissance pour l'alimentation en courant, les niveaux de puissance à sélectionner du transformateur de conduction pour l'alimentation en courant sont obtenus sur la base de la géométrie à chauffer du pré-produit dont les critères de sélection sont la longueur, la section transversale et l'épaisseur de paroi du pré-produit.

11. Procédé selon l'une au moins des revendications 1 à 10, **caractérisé en ce que**, dans des processus de préformage ou de pliage en amont du chauffage, l'épaisseur de paroi du pré-produit est réglée de façon à obtenir une augmentation de l'épaisseur de paroi par rapport à une épaisseur de paroi nominale dans des zones où le flux de courant parcourt une courte distance et une réduction de l'épaisseur de paroi par rapport à l'épaisseur de paroi nominale dans des zones où le flux de courant parcourt une longue distance.

12. Procédé selon l'une au moins des revendications 1 à 11, **caractérisé en ce que** le pré-produit est en acier, en métal léger ou en acier durcissable, en particulier en des alliages d'acier destinés à obtenir des propriétés de dureté à la presse, en des alliages d'acier ferritique destinés à obtenir des degrés de formage élevés, en des qualités d'acier non allié destinées à obtenir des degrés de formage élevés ou en des alliages d'acier destinés à obtenir des propriétés de durcissement à l'air.

13. Procédé selon l'une au moins des revendications 1 à 12, **caractérisé en ce que** le pré-produit est chauffé par conduction à une température de formage spécifique au matériau qui est d'au moins 150 °C, de préférence d'au moins 350 °C ou d'au moins 600 °C ou au moins 750 °C.

14. Procédé selon l'une au moins des revendications 1 à 13, **caractérisé en ce que** le pré-produit est chauffé par conduction à une température de formage qui est au moins égale ou supérieure à la température Ac3 et au moins 250 °C au-dessous de la température de liquidus pour des alliages d'acier destinés à obtenir des propriétés de dureté à la presse, qui est au moins égale ou supérieure à la température Ac3 et au moins 250 °C au-dessous de la température de liquidus pour des alliages d'acier ferritique destinés à obtenir des degrés de formage élevés, qui est au moins 250 °C au-dessous de la température de liquidus pour des qualités d'acier non allié, qui est au moins 50 °C au-dessous de la température A1 pour des alliages d'acier destinés à obtenir des propriétés de durcissement à l'air et entre 150 °C et 480 °C pour des métaux légers.

15. Procédé selon l'une au moins des revendications 1 à 14, **caractérisé en ce que** le pré-produit est préchauffé par conduction et/ou par chaleur radiante avant le chauffage par conduction.

16. Procédé selon l'une au moins des revendications 1 à 15, **caractérisé en ce que** le pré-produit est chauffé par conduction avant et/ou après insertion dans un outil de formage sous haute pression interne.

17. Procédé selon l'une au moins des revendications 1 à 16, **caractérisé en ce que** le pré-produit ou composant est refroidi pendant le formage sous haute pression interne et/ou après le formage sous haute pression interne, de préférence pour effectuer un durcissement par trempe.

18. Procédé selon la revendication 17, **caractérisé en ce que** le pré-produit ou composant est refroidi dans un outil de formage sous haute pression interne et pour cela l'outil de formage est refroidi au moyen d'un liquide de refroidissement et/ou le pré-produit ou composant est refroidi de l'intérieur au moyen d'un liquide de refroidissement.
